# EUROPÄISCHE PATENTSCHRIFT

(11) **EP 3 325 834 B1**
(45) Veröffentlichungstag und Bekanntmachung des Hinweises auf die Patenterteilung: **18.11.2020**
(21) Anmeldenummer: 16741017.4
(22) Anmeldetag: 20.07.2016
(51) Int. Cl.: F16D 1/033, F16D 1/108

(54) **ANORDNUNG ZUR DREHVERBINDUNG EINER BELASTUNGSMASCHINE EINES PRÜFSTANDES MIT EINEM PRÜFLING**
ARRANGEMENT FOR THE ROTATIONAL CONNECTION OF A LOAD MACHINE OF A TEST STAND TO A TEST SPECIMEN
SYSTÈME POUR RELIER À ROTATION UNE MACHINE DE CHARGE D'UN BANC DE TEST À UN ÉCHANTILLON

(30) Priorität: 23.07.2015 AT 4952015
(43) Veröffentlichungstag der Anmeldung: 30.05.2018
(73) Patentinhaber: AVL List GmbH, 8020 Graz (AT)
(72) Erfinder: PONGRATZ, Harald, 8010 Graz (AT); TSCHUBI, Christian, 8010 Graz (AT); TAUBENSCHUSS, Matthias, 8020 Graz (AT); WETZEL, Martin, 8010 Graz (AT); SCHOCHLOW, Andreas, 64354 Reinheim (DE)
(74) Vertreter: terpatent Patentanwälte ter Smitten Eberlein-Van Hoof Rütten Daubert
(86) Internationale Anmeldenummer: PCT/EP2016/067238
(87) Internationale Veröffentlichungsnummer: WO 2017/013147

(56) Entgegenhaltungen:
- CN-U- 203 348 358
- DE-A1- 10 025 095
- DE-C- 440 816
- DE-U1- 20 205 371
- GB-A- 929 323
- US-A- 4 191 487

## Beschreibung

Die Erfindung betrifft eine Anordnung und eine Vorrichtung gemäß Oberbegriff der unabhängigen Patentansprüche. Insbesondere betrifft die Erfindung eine Anordnung zur Verbindung einer Belastungsmaschine eines Prüfstandes, insbesondere eines Motorenprüfstandes oder eines Antriebsprüfstandes mit einem Prüfling.

Als Belastungsmaschinen werden Baugruppen bezeichnet, die beispielsweise passive Belastungsmaschinen wie Wasserwirbelbremsen, Wirbelstrombremsen, Hysteresebremsen oder Magnetpulverbremsen; aktive Belastungsmaschinen wie Gleichstrommaschinen, Asynchronmaschinen oder Drehstrom-Synchronmaschinen, aber gegebenenfalls auch Drehmoment-Messeinrichtungen, Drehmomenten-Waagen, Gleichstrom-Pendelmaschinen und/oder Tachogeneratoren als Drehzahl-Messeinrichtungen umfassen können. Als Prüfling wird allgemein die zu prüfende Vorrichtung bezeichnet, die beispielsweise eine Antriebsvorrichtung, einen Verbrennungsmotor, einen Antriebsstrang und/oder ein Getriebe umfassen kann.

Anordnungen zur Verbindung von Prüflingen mit Belastungsmaschinen sind in unterschiedlichen Ausführungen bekannt und publiziert.

Herkömmliche Verbindungsanordnungen umfassen meist eine Welle, die an ihren Enden über Gleichlaufgelenke mit je einer Kupplungsvorrichtung verbunden ist, wobei die Kupplungsvorrichtungen gegebenenfalls als elastische Kupplungen ausgebildet sind. Die Kupplungsvorrichtungen selbst sind meist über Schraubverbindungen oder Flanschverbindungen fest mit der Belastungsmaschine des Prüfstands bzw. dem Prüfling verbunden.

Aus der praktischen Anwendung von Prüfständen besteht eine Nachfrage nach Anordnungen zur Drehverbindung der Belastungsmaschine mit dem Prüfling, deren Drehsteifigkeit und/oder Drehdämpfung variiert werden kann. Zur grundsätzlichen Lösung dieses Problems werden derzeit Wellen mit unterschiedlichen Steifigkeiten eingesetzt. Das Umrüsten und insbesondere das Wechseln der Wellen ist jedoch bei herkömmlichen Vorrichtungen mit einem erheblichen Zeit- und Arbeitsaufwand verbunden, wobei sich der Umrüstaufwand besonders negativ auswirkt, wenn mehrere Motoren bzw. Prüflinge nacheinander mit dem Prüfstand verbunden werden sollen.

So offenbart die US 4,191,487 eine Anordnung zur Verbindung einer mittleren Welle, welche beidseitig über einen Wellenflansch an jeweils eine weiterführende Welle anschließbar ist. In Umfangsrichtung wird die Lage der Wellen zueinander über Vorsprünge und korrespondirende Ausnehmungen, die ineinander greifen und als Formschlusselemente dienen, festgelegt. Anschließend werden die Wellenflansche miteinander verschraubt, wodurch eine Axialverbindung hergestellt wird.

Des Weiteren ist aus der CN 203348358 U ebenfalls eine Anordnung zur beidseitigen Verbindung einer Welle an beidseitig weiterführende Wellen bekannt. Der Formschluss zwischen den gegenüberliegenden Wellenenden wird auch hier durch ineinandergreifende Vorsprünge und korrespondierende Ausnehmungen an den zueinander gerichteten Wellenenden hergestellt. Zur Axialsicherung sind die Wellenenden radial erweitert, wobei über die aneinander liegenden Wellenerweiterungen eine Flanschklemme montiert wird.

Eine ohne Werkzeuge lösbare und herstellbare Wellenendenverbindung wird nicht offenbart.

Aufgabe der Erfindung ist es nun, eine Anordnung bzw. eine Vorrichtung zur Drehverbindung der Belastungsmaschinenanschlusskomponente einer Belastungsmaschine mit der Prüflingsanschlusskomponente eines Prüflings zu schaffen, die die Nachteile des Standes der Technik überwinden. Insbesondere soll eine schnelle und unkomplizierte Umrüstung der Verbindungskomponenten ermöglicht werden.

Die erfindungsgemäße Aufgabe wird insbesondere durch die Merkmalskombinationen der unabhängigen Patentansprüche gelöst.

Die Erfindung umfasst eine Anordnung zur Drehverbindung der Belastungsmaschinenanschlusskomponente einer Belastungsmaschine eines Prüfstandes mit der Prüflingsanschlusskomponente eines Prüflings, umfassend mindestens eine entlang der Drehachse der Drehverbindung verlaufende Welle, eine zwischen der Welle und der Belastungsmaschinenanschlusskomponente der Belastungsmaschine angeordnete Belastungsmaschinenkupplungsvorrichtung zur Drehverbindung der Welle mit der Belastungsmaschinenanschlusskomponente, eine zwischen der Welle und der Prüflingsanschlusskomponente des Prüflings vorgesehene Prüflingskupplungsvorrichtung zur Drehverbindung der Welle mit der Prüflingsanschlusskomponente.

Die Prüflingskupplungsvorrichtung umfasst mindestens einen mit der Prüflingsanschlusskomponente eines Prüflings verbindbaren Prüflingsadapter und einen mit der Welle verbindbaren oder verbundenen Wellenadapter, der Prüflingsadapter und der Wellenadapter umfassen Formschlusselemente zur lösbaren und formschlüssigen Drehverbindung des Prüflingsadapters mit dem Wellenadapter, undes ist eine Axialverbindungsvorrichtung zur axialen Verbindung des Prüflingsadapters mit dem Wellenadapter vorgesehen.
Die Axialverbindungsvorrichtung ist bajonettverschlussartig ausgebildet, der Klemmsteg ist durch einen Bewegungsablauf einer axialen Bewegung und einer Drehbewegung der Axialverbindungsvorrichtung zwischen den Klemmkörpern der Axialverbindungsvorrichtung anordenbar, und die Klemmkörper wirken als Axialsicherung gegen eine axiale Trennung des Prüflingsadapters vom Wellenadapter und als Verdrehsicherung für die bajonettverschlussartig ausgestaltete Axialverbindungsvorrichtung.

Gegebenenfalls ist vorgesehen, dass die Formschlusselemente von den einander zugewandten Seiten des Wellenadapters und des Prüflingsadapters im Wesentlichen entlang der Richtung der Drehachse, also axial abstehen und zur Herstellung der formschlüssigen Drehverbindung in axialer Richtung ineinandersteckbar und zur Trennung der formschlüssigen Drehverbindung in axialer Richtung voneinander entfernbar sind.

Gegebenenfalls ist vorgesehen, dass der Prüflingsadapter und der Wellenadapter bei hergestellter formschlüssiger Drehverbindung zusammen einen Klemmsteg bilden, der zur axialen Verbindung des Prüflingsadapters mit dem Wellenadapter zwischen Klemmkörpern der Axialverbindungsvorrichtung eingeklemmt ist.

Gegebenenfalls ist vorgesehen, dass der Prüflingsadapter und der Wellenadapter in axialer Richtung verlaufende Öffnungen aufweisen, dass die mindestens eine Öffnung des Prüflingsadapters mit der mindestens eine Öffnung des Wellenadapters zumindest teilweise fluchtend angeordnet ist, wenn die Formschlusselemente des Prüflingsadapters mit den Formschlusselementen des Wellenadapters zur Drehverbindung in Eingriff stehen, und/oder dass die Axialverbindungsvorrichtung mindestens ein Verbindungselement umfasst, das zur axialen Verbindung des Prüflingsadapters mit dem Wellenadapter durch die Öffnungen hindurchragen.

Gegebenenfalls ist vorgesehen, dass der Prüflingsadapter und der Wellenadapter in axialer Richtung verlaufende Öffnungen aufweisen, dass die Öffnungen des Prüflingsadapters mit den Öffnungen des Wellenadapters zumindest teilweise fluchtend angeordnet sind, wenn die Formschlusselemente des Prüflingsadapters mit den Formschlusselementen des Wellenadapters zur Drehverbindung in Eingriff stehen, dass die Axialverbindungsvorrichtung Verbindungselemente umfasst, die zur axialen Verbindung des Prüflingsadapters mit dem Wellenadapter durch die Öffnungen hindurchragen, dass die Öffnungen jeweils eine Einführfreistellung zur axialen Einführung des Verbindungselements der Axialverbindungsvorrichtung und eine Klemmstegfreistellung zur axialen Verbindung des Prüflingsadapters mit dem Wellenadapter durch Betätigen des Verbindungselements umfassen, wobei die Klemmstegfreistellung entlang eines Teilkreises um die Drehachse verläuft und insbesondere gekrümmt langlochförmig ausgebildet ist, dass die Verbindungselemente jeweils einen Schaft mit einer Schaftdicke und zwei die Schaftdicke überragende Klemmkörper aufweisen, dass die Klemmstegfreistellung quer zu ihrem Verlauf und insbesondere in radialer Richtung eine freie Breite aufweist, die größer ist als die Schaftdicke des Schafts des jeweiligen Verbindungselements aber von den beiden Klemmkörpern des Verbindungselements überragt wird, dass die Einführfreistellung größer ist als der maßgebliche Abschnitt zumindest einer der beiden Klemmkörper oder beider Klemmkörper des Verbindungselements, sodass die Verbindungselemente der Axialverbindungsvorrichtung bajonettverschlussartig in axialer Richtung in die Einführfreistellungen der Öffnungen einführbar, entlang des Verlaufs der Klemmstegfreistellungen der Öffnungen um die Drehachse verdrehbar, und durch Einklemmen des Klemmstegs zwischen den Klemmkörpern fixierbar sind.

Gegebenenfalls ist vorgesehen, dass die Verbindungselemente jeweils eine Schraubverbindung umfassen, wobei der Schaft des Verbindungselements ein Schraubenschaft ist, der in zumindest einen der beiden Klemmkörper eingeschraubt oder einschraubbar ist, und dass der Abstand und die Klemmkraft zwischen den beiden Klemmkörpern durch Veränderung der Einschraubtiefe veränderbar ist.

Gegebenenfalls ist vorgesehen, dass die Axialverbindungsvorrichtung einen Bajonettring umfasst, über den die Verbindungselemente der Axialverbindungsvorrichtung miteinander verbunden sind.

Gegebenenfalls ist vorgesehen, dass die Formschlusselemente des Prüflingsadapters im Wesentlichen eine funktionale Negativform der Formschlusselemente des Wellenadapters aufweisen, wobei die Formschlusselemente des Prüflingsadapters und die Formschlusselemente des Wellenadapters zusammen eine im Wesentlichen spielfreie, formschlüssige Drehverbindung bilden oder eine im Wesentlichen in beide Drehrichtungen spielfreie, formschlüssige Drehverbindung bilden.

Gegebenenfalls ist vorgesehen, dass die Prüflingskupplungsvorrichtung zur Anbindung an die Welle eine flexible Wellenverbindung, ein Kreuzgelenk oder ein Gleichlaufgelenk aufweist.

Gegebenenfalls betrifft die Erfindung ein System umfassend eine Anordnung wobei mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind.

Gegebenenfalls ist vorgesehen, dass mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind, und dass die Wellen jeweils mit einem Wellenadapter verbunden sind.

Gegebenenfalls ist vorgesehen, dass mehrere Prüflinge vorgesehen sind, die jeweils mit einem Prüflingsadapter verbunden sind, wobei die Prüflinge und deren Prüflingsadapter wahlweise durch Verbinden mit dem Wellenadapter mit der Belastungsmaschine verbindbar sind.

Gegebenenfalls ist vorgesehen, dass die Formschlusselemente aller Wellenadapter zur formschlüssigen Drehverbindung mit den Formschlusselementen aller Prüflingsadapter geeignet und eingerichtet sind.

Gegebenenfalls ist vorgesehen, dass die Anordnung oder das System eine Belastungsmaschine eines Prüfstandes oder eines Motorenprüfstandes umfasst.

Gegebenenfalls umfasst die Erfindung eine Wellenverbindungsvorrichtung zur formschlüssigen Drehverbindung einer Nabe mit einer Welle, wobei die Wellenverbindungsvorrichtung eine formschlüssig wirkende Welle-Nabe-Verbindung umfasst, wobei die Welle-Nabe-Verbindung einen axialen Freiheitsgrad zum Einführen eines Wellenabschnitts der Welle in die Nabe und zum Entfernen des Wellenabschnitts der Welle aus der Nabe aufweist, wobei die Wellenverbindungsvorrichtung mindestens ein Axialsicherungselement zur axialen Sicherung der Welle-Nabe-Verbindung umfasst, wobei das Axialsicherungselement eine ausgefahrene Stellung aufweist, in der es in eine Axialsicherungsöffnung ragt, wodurch der axiale Freiheitsgrad der Welle-Nabe-Verbindung gesperrt ist, und wobei das Axialsicherungselement eine zurückgezogene Stellung aufweist, in der der axiale Freiheitsgrad der Welle-Nabe-Verbindung freigegeben ist.

Gegebenenfalls ist vorgesehen, dass die Wellenverbindungsvorrichtung eine Betätigungsvorrichtung zur Betätigung des Axialsicherungselements umfasst, dass die Betätigungsvorrichtung gegebenenfalls in einer Offenstellung verrastbar ist, in der das Axialsicherungselement in seine zurückgezogene Stellung bringbar oder gebracht ist, und/oder dass die Betätigungsvorrichtung gegebenenfalls in einer Geschlossenstellung verrastbar ist, in der das Axialsicherungselement in seine ausgefahrene Stellung bringbar oder gebracht ist.

Gegebenenfalls ist vorgesehen, dass die Betätigungsvorrichtung mindestens eine Rastnase, mindesten zwei Rastausnehmungen, einen starr mit der Nabe verbundenen Anschlagkörper, und ein gegenüber dem Anschlagkörper bewegbares und durch Einführen der Rastnase in eine der Rastausnehmung gegenüber dem Anschlagkörper verrastbares Betätigungselement umfasst, wobei die Betätigungsvorrichtung in ihrer Offenstellung verrastet ist, wenn die Rastnase in einer der beiden zugeordneten Rastausnehmungen angeordnet ist, und wobei die Betätigungsvorrichtung in ihrer Geschlossenstellung verrastet ist, wenn die Rastnase in der anderen der beiden zugeordneten Rastausnehmungen angeordnet ist.

Gegebenenfalls ist vorgesehen, dass die Rastnase und die Rastausnehmungen im Wesentlichen entlang einer axialer Richtung verlaufen, und dass, wenn die Rastnase in eine der Rastausnehmungen eingeführt ist, das Betätigungselement und der Anschlagkörper einen axialen Freiheitsgrad gegenübereinander aufweisen, aber eine Verdrehung des Betätigungselements gegenüber dem Anschlagkörper im Wesentlichen gehemmt, insbesondere formschlüssig gehemmt ist.

Gegebenenfalls ist vorgesehen, dass die Betätigungsvorrichtung zum Wechsel zwischen der Offenstellung und der Geschlossenstellung eine Zwischenstellung aufweist, in der die Rastnase außerhalb der Rastausnehmungen angeordnet ist, dass das Betätigungselement in der Zwischenstellung gegenüber dem Anschlagkörper einen Drehfreiheitsgrad aufweist, und dass die Rastnase zur Verrastung der Betätigungsvorrichtung in der Offenstellung oder in der Geschlossenstellung wahlweise in eine der zugeordneten Rastausnehmungen einführbar oder eingeführt ist.

Gegebenenfalls ist vorgesehen, dass die Betätigungsvorrichtung ein axial wirkendes elastisches Element, wie insbesondere eine Druckfeder aufweist, dessen Kraft das Betätigungselement gegen den Anschlagkörper und gegebenenfalls die Rastnase in eine Rastausnehmung drückt und dessen Kraft einer Bewegung des Betätigungselements von einer verrasteten Stellung in die Zwischenstellung entgegenwirkt.

Gegebenenfalls ist vorgesehen, dass die Betätigungsvorrichtung mindestens eine Steuerfläche zur Bewegung des Axialsicherungselements von seiner zurückgezogenen Stellung in die ausgefahrene Stellung durch Bewegung der Betätigungsvorrichtung von der Offenstellung in die Geschlossenstellung aufweist.

Gegebenenfalls ist vorgesehen, dass die Steuerfläche am Betätigungselement vorgesehen ist, dass die Steuerfläche entlang der axialen Richtung schräg nach innen verläuft und insbesondere der Form eines Innenkegelrings entspricht, und dass sich das Axialsicherungselement je nach axialer Position des Betätigungselements in seiner ausgefahrenen Stellung oder in seiner zurückgezogenen Stellung befindet.

Gegebenenfalls ist vorgesehen, dass die Rastausnehmungen beabstandet voneinander entlang des Drehfreiheitsgrades des Betätigungselements angeordnet sind, und/oder dass eine Rastausnehmung entlang der axialen Richtung tiefer ausgebildet ist als eine andere Rastausnehmung.

Gegebenenfalls ist vorgesehen, dass mehrere Axialsicherungselemente in radialer Richtung in der Nabe oder jeweils in einer in der Nabe angeordneten Gleitbuchse geführt angeordnet sind und in ihrer ausgefahrenen Stellung von der Nabe radial nach innen, und zur axialen Sicherung in eine in der Welle vorgesehene ringnutförmige Axialsicherungsöffnung oder in mehrere Axialsicherungsöffnungen ragen.

Gegebenenfalls umfasst die Erfindung eine Anordnung zur Drehverbindung der Belastungsmaschinenanschlusskomponente einer Belastungsmaschine mit der Prüflingsanschlusskomponente eines Prüflings, umfassend mindestens eine entlang der Drehachse der Drehverbindung verlaufende Welle, eine zwischen der Welle und der Belastungsmaschinenanschlusskomponente der Belastungsmaschine angeordnete Belastungsmaschinenkupplungsvorrichtung zur Drehverbindung der Welle mit der Belastungsmaschinenanschlusskomponente, eine zwischen der Welle und der Prüflingsanschlusskomponente des Prüflings vorgesehene Prüflingskupplungsvorrichtung zur Drehverbindung der Welle mit der Prüflingsanschlusskomponente, wobei die Belastungsmaschinenkupplungsvorrichtung und/oder gegebenenfalls die Prüflingskupplungsvorrichtung zur formschlüssigen Drehverbindung mit der Welle eine Wellenverbindungsvorrichtung gemäß der gegenständlichen Beschreibung umfasst.

Gegebenenfalls ist vorgesehen, dass die Belastungsmaschinenkupplungsvorrichtung eine elastische Kupplung umfasst, oder dass die Belastungsmaschinenkupplungsvorrichtung eine entlang des Kraftflusses des Messstrangs zwischen der Nabe und der Belastungsmaschinenanschlusskomponente der Belastungsmaschine angeordnete elastische Kupplung umfasst.

Gegebenenfalls ist vorgesehen, dass die Welle-Nabe-Verbindung als Kerbverzahnung, Keilwellenverbindung oder Zahnwellenverbindung ausgebildet ist.

Gegebenenfalls ist vorgesehen, dass die Welle in der Nabe über eine Passung, insbesondere über eine Doppelpassung axial zentriert ist, und insbesondere dass sowohl der Wellenzapfen der Welle als auch eine entfernt vom Wellenzapfen angeordnete Wellenschulter über eine entsprechende Passung im Bereich der Nabe zentriert sind, oder dass die Welle beidseitig der Welle-Nabe-Verbindung zentriert ist.

Gegebenenfalls ist vorgesehen, dass die Prüflingskupplungsvorrichtung mindestens einen mit der Prüflingsanschlusskomponente eines Prüflings verbindbaren oder verbundenen Prüflingsadapter und einen mit der Welle verbindbaren oder verbundenen Wellenadapter umfasst, dass der Prüflingsadapter und der Wellenadapter Formschlusselemente zur lösbaren und formschlüssigen Drehverbindung des Prüflingsadapters mit dem Wellenadapter umfassen, und dass eine Axialverbindungsvorrichtung zur axialen Verbindung des Prüflingsadapters mit dem Wellenadapter vorgesehen ist.

Gegebenenfalls ist vorgesehen, dass mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind.

Gegebenenfalls ist das Betätigungselement der Betätigungsvorrichtung in allen Ausführungsformen als werkzeuglos betätigbares Betätigungselement und insbesondere als manuell betätigbares Betätigungselement ausgebildet.

Gegebenenfalls wird eine als System bezeichenbare Anordnung vorgeschlagen, die zumindest eine Welle, eine Belastungsmaschinenkupplungsvorrichtung zur Drehverbindung der Welle mit der Belastungsmaschinenanschlusskomponente der Belastungsmaschine und eine Prüflingskupplungsvorrichtung zur Drehverbindung der Welle mit der Prüflingsanschlusskomponente des Prüflings umfasst, wobei die Welle die Prüflingskupplungsvorrichtung und die Belastungsmaschinenkupplungsvorrichtung verbindet.

Bevorzugt umfasst das System bzw. die Anordnung mehrere Wellen mit unterschiedlichen Steifigkeits- und/oder Dämpfungseigenschaften, die wahlweise zur Verbindung der Belastungsmaschinenkupplungsvorrichtung mit der Prüflingskupplungsvorrichtung eingesetzt werden können, um die Elastizität, die Resonanzparameter oder die Dämpfungseigenschaft des Messstrangs des Prüfstandsaufbaus an die jeweiligen Anforderungen anpassen zu können.

Gegebenenfalls umfasst das System bzw. die Anordnung mehrere Prüflingsadapter, die jeweils mit einem Prüfling verbunden werden können oder sind und die bevorzugt an die Prüflingsanschlusskomponente des Prüflings angepasst sind. Dadurch können mehrere Prüflinge für die Verbindung mit der Belastungsmaschine des Prüfstands vorbereitet sein und über wenige Handgriffe mit der Belastungsmaschine verbunden werden.

Auch ein Tausch der Welle ist durch die erfindungsgemäße Anordnung bzw. das erfindungsgemäße System erleichtert, da in bevorzugter Weise die Anschlussstücke der Welle an die Belastungsmaschinenkupplungsvorrichtung und an die Prüflingskupplungsvorrichtung standardisiert oder gleich ausgebildet ist. So weisen bevorzugt alle Prüflingsadapter dieselbe Anschlussgeometrie zur Verbindung mit dem oder den Wellenadapter(n) auf. Bevorzugt weisen alle Wellen dieselbe Anschlussgeometrie zur Verbindung mit der Prüflingskupplungsvorrichtung auf. Gegebenenfalls weist jede Welle einen eigenen Wellenadapter auf.

Gegebenenfalls ist vorgesehen, dass die elastische Kupplung auswechselbar oder dauerhaft mit der Belastungsmaschinenanschlusskomponente der Belastungsmaschine verbunden ist.

Bevorzugt ist vorgesehen, dass die Belastungsmaschinenkupplungsvorrichtung eine Wellenverbindungsvorrichtung umfasst, die als Schnellwechselsystem ausgebildet ist. Dazu ist eine Welle-Nabe-Verbindung vorgesehen, die zwar in Drehrichtung formschlüssig wirkt, jedoch einen axialen Freiheitsgrad zum Einführen der Welle oder zum Entfernen der Welle aufweist. Dieser axiale Freiheitsgrad kann durch Axialsicherungselemente gesperrt werden. Dazu weisen die Axialsicherungselemente eine ausgefahrene Stellung auf, in der sie in eine Axialsicherungsöffnung ragen, um den axialen Freiheitsgrad zu sperren und insbesondere, um den axialen Freiheitsgrad formschlüssig zu sperren.

Zur Betätigung der Axialsicherungselemente ist bevorzugt eine Betätigungsvorrichtung vorgesehen, die eine Offenstellung und eine Geschlossenstellung aufweist. Die Betätigungsvorrichtung ist gegebenenfalls derart ausgestaltet, dass ein Indikator vorgesehen ist, der anzeigt, ob sich die Betätigungsvorrichtung, und damit auch die Wellenverbindungsvorrichtung, in ihrer Offenstellung oder in ihrer Geschlossenstellung befinden. Der Indikator ist bevorzugt durch eine Rastnase und/oder durch eine Rastausnehmung gebildet.

Erfindungsgemäß ist insbesondere vorgesehen, dass die Betätigungsvorrichtung in ihrer Offenstellung und in ihrer Geschlossenstellung verrastbar ist, sodass sie ohne Zutun von außen in der jeweiligen Stellung verharrt, insbesondere bis die Stellung durch aktives Eingreifen einer Bedienperson verändert wird. Zur Betätigung der Betätigungsvorrichtung und zur Veränderung der Stellung ist insbesondere ein Betätigungselement vorgesehen. Dieses Betätigungselement weist eine Steuerfläche auf, die dazu eingerichtet ist, bei Bewegung des Betätigungselements die Axialsicherungselemente von ihrer zurückgezogenen Stellung in ihre ausgefahrene Stellung oder von ihrer ausgefahrenen Stellung in ihre zurückgezogene Stellung zu bewegen. Gegebenenfalls wird nur das Ausfahren oder das Zurückziehen aktiv durch das Betätigungselement bewirkt, wobei die jeweils andere Bewegung durch ein elastisches Element, wie beispielsweise durch eine vorspannbare oder vorgespannte Feder bewirkt wird. Gegebenenfalls ist in allen Ausführungsformen vorgesehen, dass das Betätigungselement ringförmig und insbesondere die Nabe ringförmig umgebend ausgebildet ist. Das Betätigungselement ist bevorzugt axial und rotatorisch geführt, wobei der rotatorische Freiheitsgrad des Betätigungselements bei in einer Rastausnehmung eingeführter Rastnase gesperrt ist. Bei in einer Rastausnehmung eingeführter Rastnase ist eine Verdrehung des Betätigungselements bevorzugt formschlüssig gesperrt. Gegebenenfalls ist vorgesehen, dass die Belastungsmaschinenkupplungsvorrichtung eine mit der Belastungsmaschinenanschlusskomponente des Prüfstands fest verbundene Elastikkupplung ist, an der die Wellenverbindungsvorrichtung vorgesehen ist.

Gegebenenfalls ist vorgesehen, dass entlang des Verlaufs des Anschlagkörpers oder des Betätigungselements mehrere Rastnasen vorgesehen sind, wobei bevorzugt jeder Rastnase zwei Rastausnehmungen zugeordnet sind.

Gemäß einer bevorzugten Ausführungsform der Anordnung ist vorgesehen, dass das Drehmoment entlang des Messstrangs, ausgehend von dem Prüfling, nacheinander von der Prüflingsanschlusskomponente des Prüflings, dem Prüflingsadapter, dem Wellenadapter, gegebenenfalls einem Gleichlaufgelenk, der Welle, der Welle-Nabe-Verbindung der Wellenverbindungsvorrichtung, gegebenenfalls einer elastischen Kupplung und dann auf die Belastungsmaschinenanschlusskomponente der Belastungsmaschine übertragen wird, sodass diese Komponenten entlang des Kraftflusses nacheinander angeordnet sind. Der Kraftfluss läuft bevorzugt in dieser Reihenfolge direkt über die genannten Komponenten. Gegebenenfalls geht der Kraftfluss von der Belastungsmaschine aus und verläuft folglich in die entgegengesetzte Richtung entlang der genannten Komponenten.

Gegebenenfalls ist vorgesehen, dass die Wellenverbindungsvorrichtung und insbesondere deren Welle-Naben-Verbindung für die Drehmomentklassen 150Nm, 300Nm, 600Nm, 900Nm und/oder 1500 Nm (bei 8000rpm-10000rpm) ausgelegt sind Bevorzugt ist die Nabe aus legiertem Vergütungsstahl mit einer Festigkeit von mehr als 1400N/mm² gefertigt. Die Oberfläche der verschiebbaren Teile der Wellenverbindungsvorrichtung weisen bevorzugt eine Härte von mehr als 55HRC auf.

Bevorzugt umfasst die Prüflingskupplungsvorrichtung zur Drehverbindung des Prüflingsadapters mit dem Wellenadapter Formschlusselemente. Bevorzugt wird das Drehmoment vom Prüflingsadapter auf den Wellenadapter ausschließlich über diese Formschlusselemente übertragen. Um zu verhindern, dass sich die Formschlusselemente in axialer Richtung voneinander trennen, ist eine Axialverbindungsvorrichtung vorgesehen. Bevorzugt ist diese Axialverbindungsvorrichtung bajonettartig ausgebildet oder bajonettartig bedienbar und mit einer Verdrehsicherung versehen. Die Formschlusselemente wirken bevorzugt wie Klauen einer Klauenkupplung, wie Klauen einer in beide Drehrichtungen wirkenden Klauenkupplung oder wie Klauen einer in beide Richtungen unelastisch wirkenden Klauenkupplung.

Die Welle-Nabe-Verbindung ist zur formschlüssigen Drehverbindung der Welle mit der Nabe eingerichtet, wobei bevorzugt die Übertragung des Drehmoments ausschließlich über die Welle-Nabe-Verbindung geschieht. Um zu verhindern, dass die Welle aus der Welle-Nabe-Verbindung gezogen werden kann, sind Axialsicherungselemente vorgesehen. Diese Axialsicherungselemente sind jedoch bevorzugt ausschließlich zur axialen Halterung der Welle in der Nabe und nicht zur Übertragung des Drehmoments eingerichtet. Bevorzugt ist die Nabe in einer elastischen Kupplung gehaltert, womit sowohl eine gewisse Drehelastizität, als auch eine gewisse Toleranz der axialen Abweichung des Verlaufs der Welle ermöglicht ist.

Gegebenenfalls können sowohl an der Belastungsmaschinenkupplungsvorrichtung als auch an der Prüflingskupplungsvorrichtung elastische Gelenke, wie beispielsweise Gleichlaufgelenke vorgesehen sein. Gegebenenfalls können sowohl die Belastungsmaschinenkupplungsvorrichtung als auch die Prüflingskupplungsvorrichtung eine elastische Kupplung umfassen. Als elastische Kupplung wird insbesondere eine Drehelastische Kupplung, wie beispielsweise eine drehelastisch gelagerte Elastomerkupplung bezeichnet.

Bevorzugt weist die Welle-Nabe-Verbindung der Wellenverbindungsvorrichtung eine Doppelpassung auf, wodurch die Ausrichtung der Achse der Welle gegenüber der Achse der Nabe festgelegt ist. Dabei ist bevorzugt beidseitig des in der Nabe angeordneten Wellenabschnitts der Welle ein Zentrierbereich vorgesehen, wobei die Zentrierbereiche mit einer Passung in entsprechenden Zentrierbereichen der Nabe angeordnet sind. Die Nabe kann in dieser Ausführungsform an einer elastischen Kupplung vorgesehen sein, um insbesondere eine geringfügige Achsabweichung kompensieren zu können. Am anderen Ende der Welle kann beispielsweise ein Gleichlaufgelenk vorgesehen sein. Durch diese Konfiguration ist ferner ermöglicht, dass lediglich ein Gleichlaufgelenk bzw. ein elastisches Gelenk vorgesehen sein muss, wobei an der anderen Kupplung bevorzugt eine elastische Kupplung vorgesehen ist.

In weiterer Folge wird die Erfindung anhand der Figuren weiter beschrieben, wobei Fig. 1 eine schematische Seitenansicht einer erfindungsgemäßen Anordnung bzw. eines erfindungsgemäßen Systems, Fig. 2 eine schematische Schnittdarstellungen einer Wellenverbindungsvorrichtung, Fig. 3 unterschiedliche Stellungen einer Wellenverbindungsvorrichtung, Fig. 4 eine schematische Schrägansicht eines Teils der Anordnung und insbesondere die Prüflingskupplungsvorrichtung, Fig. 5 eine Schnittdarstellung der schematischen Ansicht der Prüflingskupplungsvorrichtung und Fig. 6 die Funktion der Axialverbindungsvorrichtung zeigen.

Wenn nicht anders angegeben, so entsprechen die Bezugszeichen folgenden Komponenten: Belastungsmaschinenanschlusskomponente 1, Belastungsmaschine 2, Prüflingsanschlusskomponente 3, Prüfling 4, Drehachse 5, Welle 6, Belastungsmaschinenkupplungsvorrichtung 7, Prüflingskupplungsvorrichtung 8, Prüflingsadapter 9, Wellenadapter 10, Formschlusselement 11, Axialverbindungsvorrichtung 12, Klemmsteg 13, Klemmkörper 14, Öffnung 15, Verbindungselement 16, Klemmstegfreistellung 17, Schaft 18, Einführfreistellung 19, Bajonettring 20, Wellenverbindungsvorrichtung 21, Nabe 22, Axialsicherungselement 23, Axialsicherungsöffnung 24, Betätigungsvorrichtung 25, Rastnase 26, Rastausnehmung 27, Anschlagkörper 28, Betätigungselement 29, elastisches Element 30, Steuerfläche 31, elastische Kupplung 32.

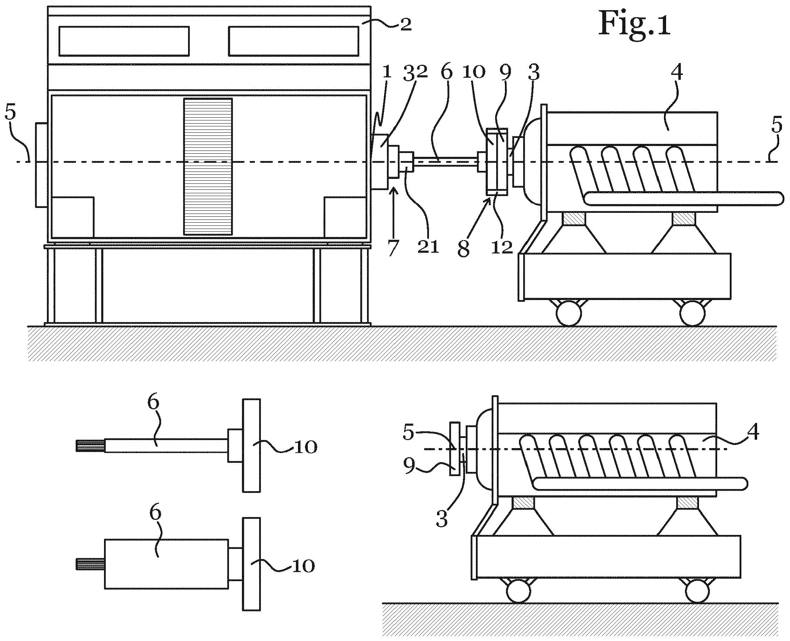

Fig. 1 zeigt eine schematische Seitenansicht einer erfindungsgemäßen Anordnung bzw. eines erfindungsgemäßen Systems das eine erfindungsgemäße Anordnung enthält. Die Anordnung umfasst eine Belastungsmaschinenkupplungsvorrichtung 7 zur Verbindung einer Welle 6 mit der Belastungsmaschinenanschlusskomponente 1 einer Belastungsmaschine 2. Ferner umfasst die Anordnung eine Prüflingskupplungsvorrichtung 8 zur Verbindung der Welle 6 mit der Prüflingsanschlusskomponente 3 eines Prüflings 4. Gegebenenfalls umfasst die Anordnung auch die Belastungsmaschine 2 und/oder den Prüfling 4. Die Anordnung oder das System umfasst bevorzugt mehrere Wellen 6, die unterschiedliche physikalische Eigenschaften wie beispielsweise unterschiedliche Steifigkeiten aufweisen können.

Die Belastungsmaschinenkupplungsvorrichtung 7 umfasst bevorzugt eine Wellenverbindungsvorrichtung 21 und gegebenenfalls eine elastische Kupplung 32. Die Prüflingskupplungsvorrichtung 8 umfasst bevorzugt einen Wellenadapter 10, einen Prüflingsadapter 9 und eine Axialverbindungsvorrichtung 12. Ferner kann das System oder die Anordnung einen weiteren Prüfling 4 umfassen, der bevorzugt ebenfalls mit einem Prüflingsadapter 9 versehen ist, sodass die Prüflinge wahlweise mit ihrem Prüflingsadapter 9 an die Belastungsmaschine 2 und insbesondere an den Wellenadapter 10 angeschlossen werden können. Gegebenenfalls sind auch die auswechselbaren Wellen 6 jeweils mit einem Wellenadapter 10 versehen. Bevorzugt ist die Anordnung bzw. das System derart ausgestaltet, dass alle Wellenadapter 10 mit allen Prüflingsadaptern 9 verbindbar sind. Bevorzugt weisen die Wellen einen Abschnitt zur Verbindung mit der Nabe 22 der Wellenverbindungsvorrichtung 21 auf. Bevorzugt sind diese Wellenabschnitte aller Wellen 6 gleich oder formident ausgebildet, sodass die Wellen wahlweise über die Wellenverbindungsvorrichtung 21 mit der Belastungsmaschine 2 verbunden und ausgetauscht werden können.

Das vorliegende System bzw. die vorliegende Anordnung ermöglicht eine schnelle, effiziente Wechselbarkeit der Prüflinge 4 und der Wellen 6. So können zur Lösung der erfindungsgemäßen Aufgabe unterschiedliche Prüflinge 4 und unterschiedliche Wellen 6 nacheinander oder wahlweise mit der Belastungsmaschine 2 verbunden werden, wobei die Umrüstzeit und die Handhabbarkeit verbessert sind.

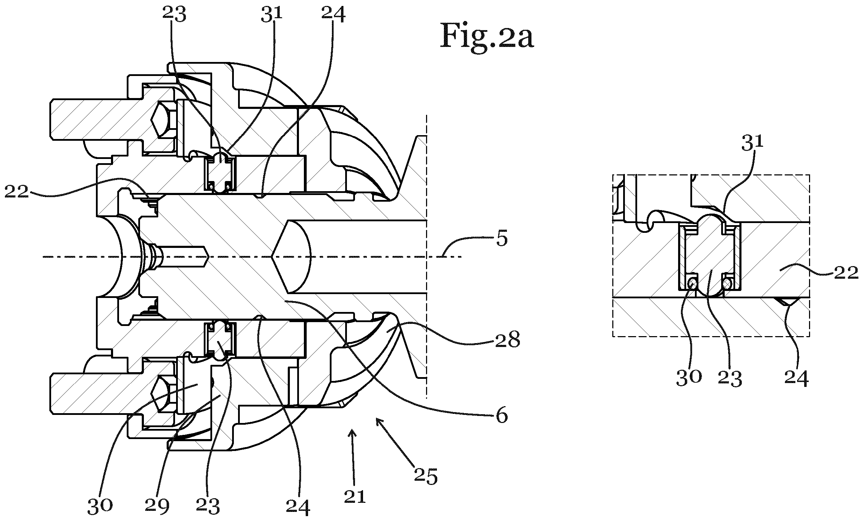

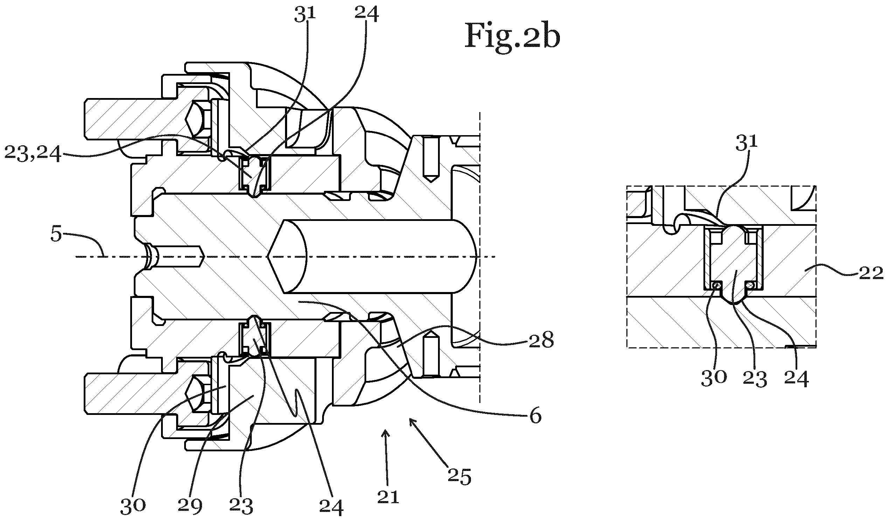

Fig. 2 zeigt zwei schematische Schnittdarstellungen einer Wellenverbindungsvorrichtung 21 in unterschiedlichen Stellungen, wobei Fig. 2a die Wellenverbindungsvorrichtung 21 in ihrer Offenstellung zeigt, in der eine Welle 6 in axialer Richtung, d.h. entlang der Drehachse 5 in die Nabe 22 eingeführt werden kann, oder aus der Nabe ausgezogen werden kann. Fig. 2b zeigt dieselbe Wellenverbindungsvorrichtung wie Fig. 2a, jedoch in der Geschlossenstellung, in der der axiale Freiheitsgrad der Welle-Nabe-Verbindung gesperrt ist, sodass die Welle 6 in der Wellenverbindungsvorrichtung 21 axial gesichert ist.

Die Wellenverbindungsvorrichtung 21 ist zur formschlüssigen Drehverbindung einer Welle 6 mit einer Nabe 22 geeignet und/oder eingerichtet. Die Welle-Nabe-Verbindung ist in allen Ausführungsformen bevorzugt als formschlüssige Drehverbindung, insbesondere als Keilwellenanordnung, als Welle-Nabe-Verbindung mit Kerbverzahnung oder als Zahnwellenverbindung ausgebildet. Diese Welle-Nabe-Verbindung umfasst bevorzugt einen axialen Freiheitsgrad, sodass die Welle 6 oder zumindest ein Abschnitt der Welle 6 in die Nabe 22 eingeführt oder aus der Nabe 22 entfernt werden kann. Zur axialen Sicherung des Wellenabschnitts der Welle 6 in der Wellenverbindungsvorrichtung 21 ist zumindest ein Axialsicherungselement 23 vorgesehen, das zur Sperrung des axialen Freiheitsgrades der Welle-Nabe-Verbindung in eine Axialsicherungsöffnung 24 ragt. In allen Ausführungsformen sind bevorzugt mehrere Axialsicherungselemente 23 vorgesehen. Diese können beispielsweise in eine ringförmig angeordnete Axialsicherungsöffnung 24 ragen. Gegebenenfalls sind mehrere Axialsicherungsöffnungen 24 vorgesehen, die derart ausgestaltet sind, dass je ein Axialsicherungselement 23 oder mehrere Axialsicherungselemente 23 in je eine der Axialsicherungsöffnungen 24 ragen kann oder können, um den axialen Freiheitsgrad der Welle-Nabe-Verbindung zu sperren. Bevorzugt sind die Axialsicherungsöffnungen 24 in allen Ausführungsformen durch eine Ringnut und bevorzugt durch eine einzige Ringnut gebildet, die insbesondere im Bereich des in der Nabe 22 aufgenommenen Wellenabschnitts vorgesehen ist, sodass keine exakte Drehausrichtung der Axialsicherungsöffnungen 24 gegenüber den Axialsicherungselementen 23 erfolgen muss.

Bevorzugt sind die Axialsicherungselemente 23 bewegbar und insbesondere geführt oder in einer Gleitbuchse geführt in der Nabe 22 angeordnet. Die Axialsicherungselemente 23 weisen eine ausgefahrene Stellung auf, in der sie die Nabe nach innen überragen, um beispielsweise in die Axialsicherungsöffnungen 24 der Welle 6 eingeführt zu werden. Ferner weisen die Axialsicherungselemente 23 eine zurückgezogene Stellung auf, in der sie derart in die Nabe 22 zurückgezogen sind, dass der axiale Freiheitsgrad der Welle-Nabe-Verbindung freigegeben ist.

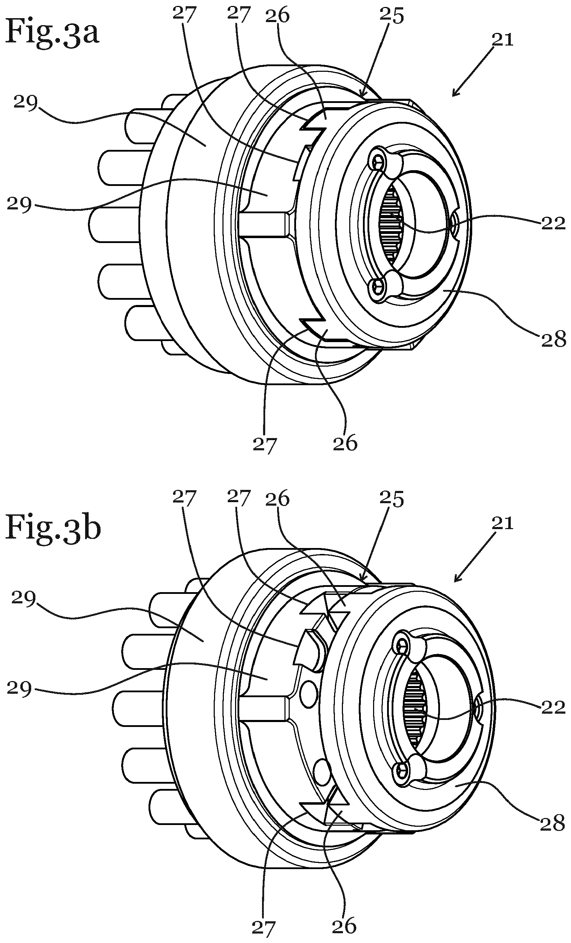

Zur Bewegung bzw. zur Betätigung der Axialsicherungselemente 23 ist eine Betätigungsvorrichtung 25 vorgesehen. Die Betätigungsvorrichtung 25 umfasst eine Offenstellung, in der sich die Axialsicherungselemente 23 bevorzugt in ihrer zurückgezogenen Stellung befinden. Ferner umfasst die Betätigungsvorrichtung 25 eine Geschlossenstellung, in der sich die Axialsicherungselemente 23 bevorzugt in ihrer ausgefahrenen Stellung befinden. Bevorzugt ist in allen Ausführungsformen vorgesehen, dass die Betätigungsvorrichtung 25 sowohl in ihrer Offenstellung als auch in ihrer Geschlossenstellung verrastbar ist, sodass die Betätigungsvorrichtung 25 insbesondere nicht selbsttätig von der Offenstellung in die Geschlossenstellung oder von der Geschlossenstellung in die Offenstellung wechseln kann. Die Funktion der Verrastung wird insbesondere in den Figuren 3a bis 3d beschrieben.

Die Betätigungsvorrichtung 25 umfasst bevorzugt einen Anschlagkörper 28 und ein gegenüber dem Anschlagkörper 28 bewegbares und verrastbares Betätigungselement 29. Der Anschlagkörper 28 ist bevorzugt starr mit der Nabe 22 verbunden. Ferner umfasst die Wellenverbindungsvorrichtung 21 bevorzugt ein elastisches Element 30, das zur Ausübung einer Kraft eingerichtet und beispielsweise als Druckfeder, Zugfeder oder ähnliches Element ausgebildet ist. Das elastische Element 30 wirkt auf das Betätigungselement 29 und drückt das Betätigungselement 29 bevorzugt an den Anschlagkörper 28. Durch die elastische Ausgestaltung des elastischen Elements 30 und durch einen gewissen Bewegungsspielraum des Betätigungselements 29, kann das Betätigungselement 29 in axialer Richtung gegen die Kraft des elastischen Elements 30 bewegt werden. Insbesondere kann das Betätigungselement 29 in allen Ausführungsformen derart gegen die Kraft des elastischen Elements 30 bewegt werden, dass die Verrastung der Betätigungsvorrichtung 25 gelöst werden kann.

Die Betätigungsvorrichtung 25 umfasst zumindest eine Steuerfläche 31 zur Bewegung des zumindest einen Axialsicherungselements 23. Bevorzugt ist eine Steuerfläche 31 vorgesehen, über die mehrere Axialsicherungselemente 23 bewegt werden können. Die Steuerfläche 31 ist in bevorzugter Weise entlang der axialen Richtung des Betätigungselements 29 schräg angeordnet, wodurch bei einer axialen Verschiebung des Betätigungselements 29, insbesondere entgegen oder mit der Kraft des elastischen Elements 30, die Steuerfläche 31 die Position des Axialsicherungselements 23 oder der Axialsicherungselemente 23 verändern kann. Gemäß einer bevorzugten Ausführungsform kann die Steuerfläche 31 im Wesentlichen kegelig und insbesondere als Innenkegelring ausgebildet sein. Durch eine Verschiebung des Betätigungselements 29 tritt die als Kegelfläche ausgebildete Steuerfläche 31 in Kontakt mit Abschnitten der Axialsicherungselemente 23, wodurch diese durch die schräge Anordnung der Steuerfläche 31 von ihrer zurückgezogenen Stellung in ihre ausgefahrene Stellung, oder von ihrer ausgefahrenen Stellung in ihre zurückgezogene Stellung bewegt werden können. Zur Verdeutlichung der Funktion der Betätigungsvorrichtung 25 sind die Steuerfläche 31, ein Axialsicherungselement 23 und eine Axialsicherungsöffnung 24 in der Offenstellung und der Geschlossenstellung der Betätigungsvorrichtung 25 vergrößert dargestellt.

In bevorzugter Weise ist ein weiteres elastisches Element 30 vorgesehen, das dazu geeignet und/oder eingerichtet ist, das oder die Axialsicherungselement(e) 23 zu bewegen. So kann die Steuerfläche 31 dazu eingerichtet sein, eine Bewegung der Axialsicherungselemente 23 lediglich in eine Richtung aktiv anzutreiben. Die Rückstellung der Axialsicherungselemente 23 kann beispielsweise über das elastische Element 30 geschehen, das beispielsweise als Druckfeder ausgebildet ist. Bevorzugt drückt das elastische Element 30 das Axialsicherungselement 23 oder die Axialsicherungselemente 23 gegen die Steuerfläche 31 und wirkt dadurch der Steuerung oder der Bewegung durch die Steuerfläche 31 elastisch entgegen. Dadurch kann beispielsweise bewirkt werden, dass die Axialsicherungselemente 23, angetrieben durch das elastische Element 30, selbsttätig in ihre zurückgezogene Stellung zurückkehren, wenn sich die Betätigungsvorrichtung 25 in ihrer Offenstellung befindet.

Fig. 2b zeigt dieselbe Vorrichtung wie Fig. 2a, wobei sich die Wellenverbindungsvorrichtung 21 der Fig. 2b in ihrer Geschlossenstellung befindet. Die Komponenten der Fig. 2b entsprechen den Komponenten der Fig. 2a. Die Welle 6 ist in der Nabe 22 über eine Passung, insbesondere über eine Doppelpassung zentriert. Sowohl der Wellenzapfen als auch eine entfernt vom Wellenzapfen angeordnete Wellenschulter sind über eine entsprechende Passung im Bereich der Nabe zentriert.

Die Figuren 3a bis 3d zeigen unterschiedliche Stellungen einer Wellenverbindungsvorrichtung 21, die insbesondere gemäß Fig. 2a und gemäß Fig. 2b ausgestaltet sein kann. Die Wellenverbindungsvorrichtung 21 umfasst eine Nabe 22 zur Einführung einer nicht dargestellten Welle. Ferner umfasst die Wellenverbindungsvorrichtung 21 eine Betätigungsvorrichtung 25. Die Betätigungsvorrichtung 25 umfasst einen Anschlagkörper 28 und ein Betätigungselement 29. Das Betätigungselement 29 ist gegenüber dem Anschlagkörper 28 bewegbar angeordnet. Ferner umfasst die Betätigungsvorrichtung 25 mindestens eine Rastnase 26 und mindestens zwei Rastausnehmungen 27. Die Rastausnehmungen 27 sind derart ausgebildet, dass die Rastnase 26 wahlweise in eine der Rastausnehmungen 27 eingeführt werden kann. Die Einführ- bzw. Auszugsrichtung verläuft bevorzugt etwa axial. Durch diese Ausgestaltung kann die Rastnase 26 in axialer Richtung aus einer der Rastausnehmungen 27 entfernt werden. Diese Bewegung des Betätigungselements 29 geschieht bevorzugt gegen die Kraft eines elastischen Elements 30. Das elastische Element 30 ist bevorzugt derart vorgespannt, dass das Betätigungselement 29 an den Anschlagkörper 28 gedrückt ist. Insbesondere werden durch das elastische Element 30 die Rastnase 26 in eine der Rastausnehmungen 27 gedrückt. Um die Rastnase 26 von einer Rastausnehmung 27 in die andere zu befördern, weist die Betätigungsvorrichtung 25 und insbesondere das Betätigungselement 29 eine Zwischenstellung auf. In dieser Zwischenstellung ist die Rastnase aus der Rastausnehmung entfernt. Dadurch kann das Betätigungselement 29 in der vorliegenden Ausführungsform gegenüber dem Anschlagkörper 28 verdreht werden. Die Rastausnehmungen 27 sind bevorzugt entlang eines Teilkreises der Drehachse angeordnet, sodass durch Verdrehung des Betätigungselements 29 gegenüber dem Anschlagkörper 28 die Wahl zwischen Offenstellung und Geschlossenstellung erfolgen kann. In allen Ausführungsformen sind die Rastausnehmungen 27 bzw. die Rastnase 26 bevorzugt derart ausgestaltet, dass bei in einer Rastausnehmung 27 eingeführter Rastnase 26 eine Verdrehung bzw. ein Wechsel zwischen Offenstellung und Geschlossenstellung formschlüssig verhindert ist.

Gemäß einer bevorzugten Ausführungsform sind die Rastausnehmungen 27 im Betätigungselement 29 vorgesehen. Gemäß dieser bevorzugten Ausführungsform ist die Rastnase 26 am Anschlagkörper 28 vorgesehen.

Die Rastausnehmungen 27, die einer Rastnase 26 zugeordnet sind, weisen in axialer Richtung eine unterschiedliche Tiefe auf, wodurch die Rastnase 26 in eine Rastausnehmung 27 tiefer eingeführt sein kann als in die andere Rastausnehmung 27. Das Betätigungselement 29 weist dadurch je nachdem in welche der beiden Rastausnehmungen 27 die Rastnase 26 eingeführt ist eine andere axiale Position auf. Dieser Unterschied der axialen Position bewirkt in weiterer Folge, dass sich die Axialsicherungselemente 23, beeinflusst durch die Steuerfläche 31, in ihrer ausgefahrenen Stellung befinden, wenn die Rastnase 26 in einer der Rastausnehmungen angeordnet ist, und dass sich die Axialsicherungselemente 23 in ihrer zurückgezogenen Stellung befinden, wenn die Rastnase 26 in der anderen Rastausnehmung 27 angeordnet ist,

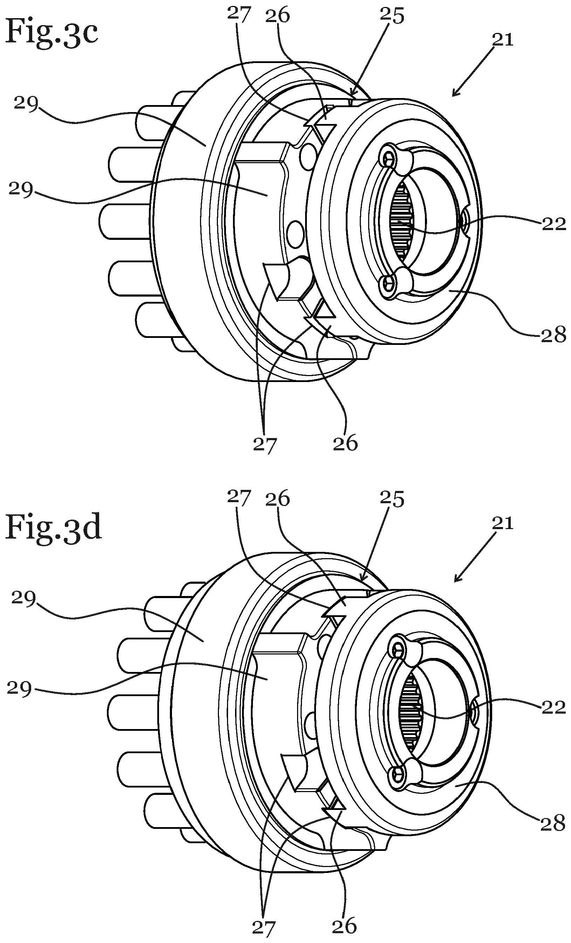

Fig. 3a zeigt die Wellenverbindungsvorrichtung 21, bei der sich die Betätigungsvorrichtung 25 in ihrer Offen-Stellung befindet. Fig. 3b zeigt die Wellenverbindungsvorrichtung 21 bzw. deren Betätigungsvorrichtung 25 in einer Zwischenstellung, in der die Rastnase 26 aus der Rastausnehmung 27 gezogen ist. Diese Trennung erfolgt durch Bewegung des Betätigungselements 29, weg von dem Anschlagkörper 28, und insbesondere gegen die Federkraft des elastischen Elements 30. Fig. 3c zeigt die Wellenverbindungsvorrichtung 21 bzw. die Betätigungsvorrichtung 25 in einer weiteren Zwischenstellung, in der die Rastnase 26 zur zweiten Rastausnehmung 27 verdreht ist. Fig. 3d zeigt die Wellenverbindungsvorrichtung 21 bzw. deren Betätigungsvorrichtung 25, bei der die Rastnase 26 in die andere Rastausnehmung 27 eingeführt ist, sodass sich die Betätigungsvorrichtung 25 in ihrer Geschlossenstellung befindet. Zum Einführen einer Rastnase 26 in eine Rastausnehmung 27 muss die Rastnase 26 bevorzugt fluchtend mit einer der Rastausnehmungen 27 angeordnet sein. Die Stellung der Fig. 3a entspricht gegebenenfalls der Stellung der Fig. 2a. Die Stellung der Fig. 3d entspricht gegebenenfalls der Stellung der Fig. 2b. Die Rastnase 26 bzw. die Rastausnehmungen 27 sind bei der vorliegenden Ausgestaltung außenliegend ausgeführt und können dadurch als Indikator zur Anzeige der Stellung der Betätigungsvorrichtung 25 dienen.

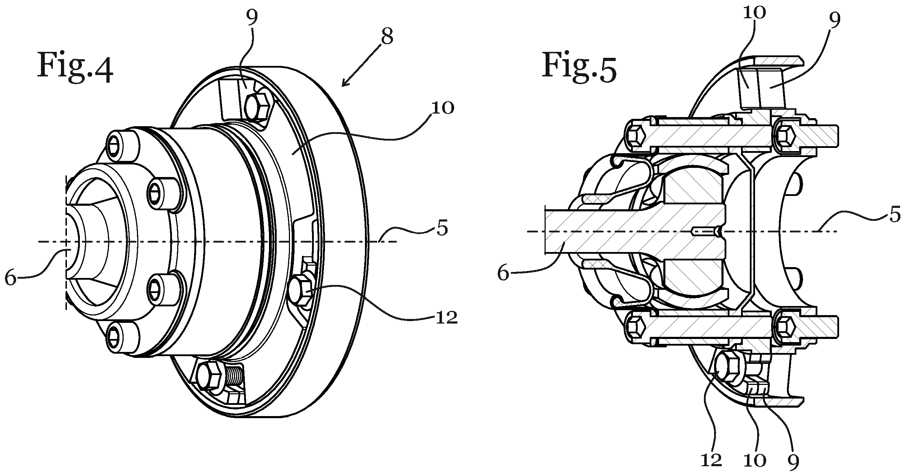

Fig. 4 zeigt eine schematische Schrägansicht eines Teils der Anordnung und insbesondere der Prüflingskupplungsvorrichtung 8. Die Prüflingskupplungsvorrichtung 8 umfasst einen Wellenadapter 10, einen Prüflingsadapter 9 und eine Axialverbindungsvorrichtung 12 zur axialen Verbindung des Wellenadapters 10 mit dem Prüflingsadapter 9. In bevorzugter Weise dient die Axialverbindungsvorrichtung 12 nicht der Übertragung des Drehmoments von der Prüflingsanschlusskomponente 3 des Prüflings 4 auf die Welle 6, sondern lediglich zur axialen Sicherung und zur Verbindung des Prüflingsadapters 9 mit dem Wellenadapter 10. Die Übertragung des Drehmoments erfolgt über Formschlusselemente 11, durch die der Prüflingsadapter 9 mit dem Wellenadapter 10 formschlüssig drehverbunden ist.

Fig. 5 zeigt eine Schnittdarstellung der schematischen Ansicht der Prüflingskupplungsvorrichtung 8 bzw. Teilen der Anordnung der Fig. 4. Die Welle 6 weist an ihrem in der Prüflingskupplungsvorrichtung 8 angeordneten Ende eine flexible Wellenverbindung und insbesondere ein Gleichlaufgelenk auf. Der Prüflingsadapter 9 ist dazu eingerichtet, mit der Prüflingsanschlusskomponente 3 des Prüflings 4 verbunden zu werden. Diese Verbindung geschieht im vorliegenden Fall und bevorzugt in allen Ausführungsformen über eine Schraub- oder Flanschverbindung.

Der Wellenadapter 10 ist im vorliegenden Fall mit dem Gleichlaufgelenk der Welle 6 verbunden. Jedoch kann grundsätzlich jede Verbindung zum Einsatz kommen, die eine Verbindung des Wellenadapters 10 mit der Welle 6 in der vorliegenden Anordnung ermöglicht.

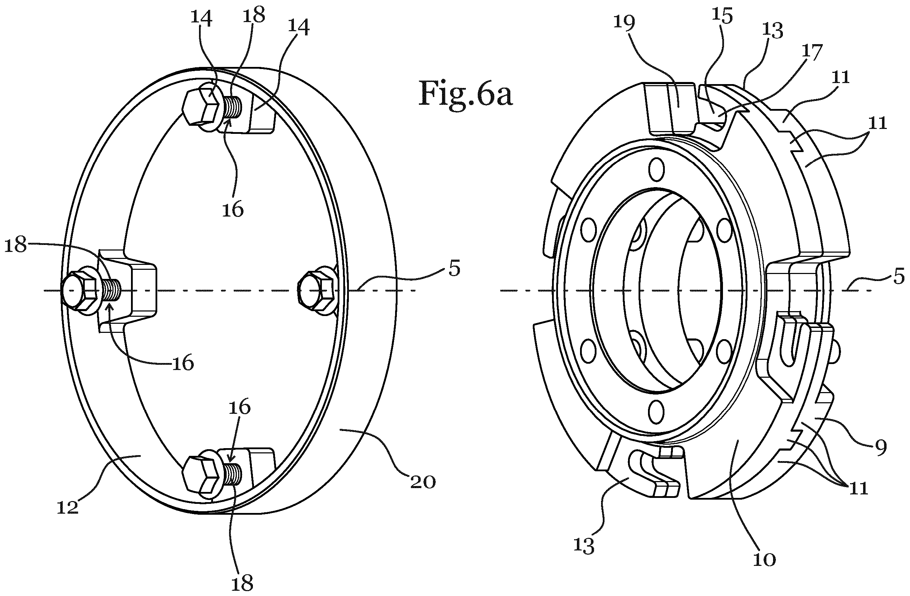

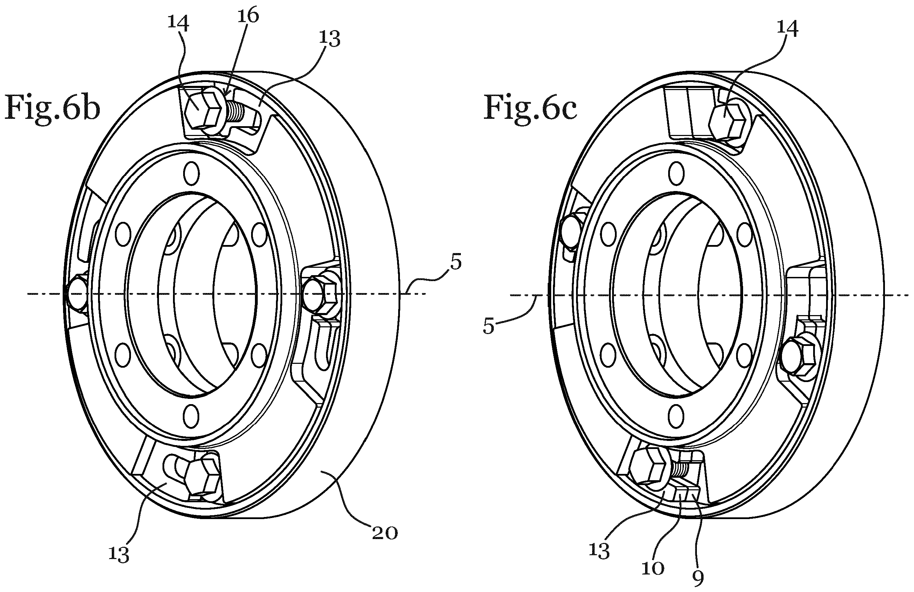

Die Figuren 6a, 6b und 6c zeigen die Funktion der Axialverbindungsvorrichtung 12 zur axialen Verbindung des Prüflingsadapters 9 mit dem Wellenadapter 10. Sowohl der Prüflingsadapter 9 als auch der Wellenadapter 10 umfasst Formschlusselemente 11. Diese Formschlusselemente 11 sind insbesondere an den einander zugewandten Seiten des Wellenadapters 10 und des Prüflingsadapters 9 vorgesehen. Die Formschlusselemente 11 sind insbesondere dazu eingerichtet, eine formschlüssige Drehverbindung zwischen dem Wellenadapter 10 und dem Prüflingsadapter 9 herzustellen. In bevorzugter Weise sind die Formschlusselemente 11 der beiden Adapter 9, 10 in axialer Richtung, also entlang der Drehachse 5 ineinandersteckbar ausgebildet. Die Formschlusselemente 11 sind zur Übertragung und insbesondere zur formschlüssigen Drehübertragung des Drehmoments eingerichtet.

Zur axialen Verbindung und somit zur axialen Sicherung dieser Drehverbindung ist die Axialverbindungsvorrichtung 12 vorgesehen. Der Prüflingsadapter 9 und der Wellenadapter 10 bilden bei hergestellter formschlüssiger Drehverbindung einen Klemmsteg 13. Dieser Klemmsteg 13 wird zwischen zwei Klemmkörpern 14 eingeklemmt, um eine axiale Verbindung des Prüflingsadapters 9 mit dem Wellenadapter 10 herzustellen. In allen Ausführungsformen können ein Abschnitt des Wellenadapters 10 und des Prüflingsadapters 9 parallel entlang des Verlaufs des Klemmstegs 13 und im Wesentlichen quer oder normal zur Klemmkraft der Klemmkörper 14 verlaufen.

Der Prüflingsadapter 9 und der Wellenadapter 10 umfassen bevorzugt in axialer Richtung verlaufende Öffnungen 15, die insbesondere als Durchgangsöffnungen ausgebildet sind. Die Axialverbindungsvorrichtung 12 umfasst Verbindungselemente 16, die durch die Öffnungen 15 hindurchgeführt werden können. Die Verbindungselemente 16 umfassen bevorzugt einen Schaft 18, der durch die Öffnung 15 hindurchragt, um die beiden Klemmkörper 14 derart miteinander zu verbinden, dass diese eine Verklemmung des Klemmstegs bewirken.

Die Öffnungen 15 umfassen jeweils bevorzugt eine Klemmstegfreistellung 17 und eine Einführfreistellung 19. Durch die spezielle Ausgestaltung der Öffnungen 15 und der Axialverbindungsvorrichtung 12 ist eine bajonettartig betätigbare Axialverbindungsvorrichtung 12 gebildet. So können, bei formschlüssig miteinander verbundenem Wellenadapter 10 und Prüflingsadapter 9, die Verbindungselemente 16 im Wesentlichen in axialer Richtung durch die Öffnungen 15 und insbesondere durch die Einführfreistellung 19 der Öffnung 15 eingeführt werden. In dieser Stellung kann dann das Verbindungselement 16 über eine Drehbewegung in die Klemmstegfreistellung 17 bewegt werden. Der Schaft 18 des Verbindungselements 16 ist dabei derart ausgestaltet, dass er in die Klemmstegfreistellung 17 passt. Die Klemmelemente 14 hingegen überragen die Klemmstegfreistellung und erstrecken sich bis zum Klemmsteg 13, sodass dieser zwischen den Klemmelementen 14 eingeklemmt werden kann.

Fig. 6b zeigt eine Stellung, in der die Verbindungselemente 16 in die Einführfreistellung 19 eingeführt sind. Fig. 6c zeigt eine Stellung, in der die Verbindungselemente 16 über eine Drehbewegung in die Klemmstegfreistellungen 17 eingeführt sind.

Zur Herstellung der axialen Verbindung des Prüflingsadapters 9 mit dem Wellenadapter 10 müssen bei der vorliegenden Ausführungsform lediglich vier Schrauben festgezogen werden. Anzumerken ist, dass diese Schrauben nicht zur Übertragung des Drehmoments, sondern rein zur Axialsicherung eingerichtet sind.

In der vorliegenden Ausführungsform umfassen die Verbindungselemente 16 zwei Klemmkörper 14, wobei ein Klemmkörper 14 als Schraubenkopf bzw. als Schraubenmutter und das andere Klemmelement 14 als Lasche oder Steg ausgebildet ist. Bevorzugt sind mehrere Verbindungselemente 16 über einen Bajonettring 20 miteinander verbunden. Insbesondere sind die Verbindungselemente 16 derart entlang des Verlaufs des Bajonettrings 20 angeordnet, dass sie in die Öffnungen 15 der Adapter 9, 10 eingeführt werden können. Bevorzugt sind die als Stege oder Laschen ausgeführten Klemmkörper 14 mit dem Bajonettring verbunden, und gegebenenfalls einstückig verbunden. Bevorzugt ragen die als Stege oder Laschen ausgeführten Klemmkörper vom Bajonettring 20 nach innen.

Gemäß einer bevorzugten Ausführungsform ist der Klemmsteg 13, wie insbesondere in den Figuren 6 dargestellt ist, im Wesentlichen C-förmig ausgebildet, wobei die Schenkel des Klemmstegs 13 im Wesentlichen entlang einem Teilkreis um die Drehachse 5 verlaufen. Der C-förmige Klemmsteg 13 weist eine Öffnung 15 auf, die insbesondere durch die Klemmstegfreistellung 17 gebildet ist. Die Klemmstegfreistellung 17 ist im Wesentlichen langlochförmig und/oder einem Teilkreis um die Drehachse 5 folgend ausgebildet. Die Klemmstegfreistellung 17 mündet in die Einführfreistellung 19 der Öffnung 15, wodurch ein durch die Einführfreistellung 19 eingeführtes Verbindungselement 16 in weiterer Folge in die Klemmstegfreistellung 17 eingeführt werden kann. Gegebenenfalls können die Formschlusselemente 11, bzw. deren formschlüssig wirkenden Flanken, zwischen den Öffnungen 15 vorgesehen sein. Gegebenenfalls sind lediglich eine Öffnung 15 und ein Verbindungselement 16 vorgesehen. Gegebenenfalls sind zwei, drei, vier, fünf oder mehr Verbindungselemente 16 mit entsprechend angeordneten Öffnungen 15 vorgesehen.

Gemäß einer bevorzugten Ausführungsform umfasst die Anordnung eine Prüflingskupplungsvorrichtung 8, die gemäß einer der Figuren 4, 5 oder 6 ausgebildet ist. Bevorzugt umfasst diese Anordnung eine Belastungsmaschinenkupplungsvorrichtung, die gemäß einer der Figuren 2 oder 3 ausgebildet ist.

## Patentansprüche

1. Anordnung zur Drehverbindung einer Belastungsmaschinenanschlusskomponente (1) einer Belastungsmaschine (2) eines Prüfstandes mit einer Prüflingsanschlusskomponente (3) eines Prüflings (4), umfassend:
- mindestens eine entlang der Drehachse (5) der Drehverbindung verlaufende Welle (6),
- eine Belastungsmaschinenkupplungsvorrichtung (7) zur Drehverbindung der Welle (6) mit der Belastungsmaschinenanschlusskomponente (1),
- eine Prüflingskupplungsvorrichtung (8) zur Drehverbindung der Welle (6) mit der Prüflingsanschlusskomponente (3),
**dadurch gekennzeichnet,**
- **dass** die Prüflingskupplungsvorrichtung (8) mindestens einen mit der Prüflingsanschlusskomponente (3) eines Prüflings (4) verbindbaren Prüflingsadapter (9) und einen mit der Welle (6) verbindbaren oder verbundenen Wellenadapter (10) umfasst,
- **dass** der Prüflingsadapter (9) und der Wellenadapter (10) Formschlusselemente (11) zur lösbaren und formschlüssigen Drehverbindung des Prüflingsadapters (9) mit dem Wellenadapter (10) umfassen,
- **dass** eine Axialverbindungsvorrichtung (12) zur axialen Verbindung des Prüflingsadapters (9) mit dem Wellenadapter (10) vorgesehen ist
- **dass** die Axialverbindungsvorrichtung (12) bajonettverschlussartig ausgebildet ist,
- **dass** ein Klemmsteg (13) durch einen Bewegungsablauf einer axialen Bewegung und einer Drehbewegung der Axialverbindungsvorrichtung (12) zwischen den Klemmkörpern (14) der Axialverbindungsvorrichtung (12) anordenbar ist,
- **und dass** die Klemmkörper (14) als Axialsicherung gegen eine axiale Trennung des Prüflingsadapters (9) vom Wellenadapter (10) und als Verdrehsicherung für die bajonettverschlussartig ausgestaltete Axialverbindungsvorrichtung (12) wirken.

2. Anordnung nach Anspruch 1,
**dadurch gekennzeichnet, dass**
die Formschlusselemente (11) von den einander zugewandten Seiten des Wellenadapters (10) und des Prüflingsadapters (9) im Wesentlichen entlang der Richtung der Drehachse (5), also axial abstehen und zur Herstellung der formschlüssigen Drehverbindung in axialer Richtung ineinandersteckbar und zur Trennung der formschlüssigen Drehverbindung in axialer Richtung voneinander entfernbar sind.

3. Anordnung nach Anspruch 1 oder 2,
**dadurch gekennzeichnet, dass**
der Prüflingsadapter (9) und der Wellenadapter (10) bei hergestellter formschlüssiger Drehverbindung zusammen den Klemmsteg (13) bilden, der zur axialen Verbindung des Prüflingsadapters (9) mit dem Wellenadapter (10) zwischen Klemmkörpern (14) der Axialverbindungsvorrichtung (12) eingeklemmt ist.

4. Anordnung nach einem der Ansprüche 1 bis 3,
**dadurch gekennzeichnet,**
- **dass** der Prüflingsadapter (9) und der Wellenadapter (10) in axialer Richtung verlaufende Öffnungen (15) aufweisen,
- **dass** die mindestens eine Öffnung (15) des Prüflingsadapters (9) mit der mindestens eine Öffnung (15) des Wellenadapters (10) zumindest teilweise fluchtend angeordnet ist, wenn die Formschlusselemente (11) des Prüflingsadapters (9) mit den Formschlusselementen (11) des Wellenadapters (10) zur Drehverbindung in Eingriff stehen,
- **und dass** die Axialverbindungsvorrichtung (12) mindestens ein Verbindungselement (16) umfasst, das zur axialen Verbindung des Prüflingsadapters (9) mit dem Wellenadapter (10) durch die Öffnungen (15) hindurchragen.

5. Anordnung nach einem der Ansprüche 1 bis 4,
**dadurch gekennzeichnet,**
- **dass** der Prüflingsadapter (9) und der Wellenadapter (10) in axialer Richtung verlaufende Öffnungen (15) aufweisen,
- **dass** die Öffnungen (15) des Prüflingsadapters (9) mit den Öffnungen (15) des Wellenadapters (10) zumindest teilweise fluchtend angeordnet sind, wenn die Formschlusselemente (11) des Prüflingsadapters (9) mit den Formschlusselementen (11) des Wellenadapters (10) zur Drehverbindung in Eingriff stehen,
- **dass** die Axialverbindungsvorrichtung (12) Verbindungselemente (16) umfasst, die zur axialen Verbindung des Prüflingsadapters (9) mit dem Wellenadapter (10) durch die Öffnungen (15) hindurchragen,
- **dass** die Öffnungen (15) jeweils eine Einführfreistellung (19) zur axialen Einführung des Verbindungselements (16) der Axialverbindungsvorrichtung (12) und eine Klemmstegfreistellung (17) zur axialen Verbindung des Prüflingsadapters (9) mit dem Wellenadapter (10) durch Betätigen des Verbindungselements (16) umfassen, wobei die Klemmstegfreistellung (17) entlang eines Teilkreises um die Drehachse (5) verläuft und insbesondere gekrümmt langlochförmig ausgebildet ist,
- **dass** die Verbindungselemente (16) jeweils einen Schaft (18) mit einer Schaftdicke und zwei die Schaftdicke überragende Klemmkörper (14) aufweisen,
- **dass** die Klemmstegfreistellung (17) quer zu ihrem Verlauf und insbesondere in radialer Richtung eine freie Breite aufweist, die größer ist als die Schaftdicke des Schafts (18) des jeweiligen Verbindungselements (16) aber von den beiden Klemmkörpern (14) des Verbindungselements (16) überragt wird,
- **dass** die Einführfreistellung (19) größer ist als der maßgebliche Abschnitt zumindest einer der beiden Klemmkörper (14) oder beider Klemmkörper (14) des Verbindungselements (16),
- **sodass** die Verbindungselemente (16) der Axialverbindungsvorrichtung (12) bajonettverschlussartig in axialer Richtung in die Einführfreistellungen (19) der Öffnungen (15) einführbar, entlang des Verlaufs der Klemmstegfreistellungen (17) der Öffnungen (15) um die Drehachse (5) verdrehbar, und durch Einklemmen des Klemmstegs (13) zwischen den Klemmkörpern (14) fixierbar sind.

6. Anordnung nach einem der Ansprüche Anspruch 4 oder 5,
**dadurch gekennzeichnet, dass**
die Verbindungselemente (16) jeweils eine Schraubverbindung umfassen, wobei ein Schaft (18) des Verbindungselements (16) ein Schraubenschaft ist, der in zumindest einen der beiden Klemmkörper (14) eingeschraubt oder einschraubbar ist, und dass der Abstand und die Klemmkraft zwischen den beiden Klemmkörpern (14) durch Veränderung der Einschraubtiefe veränderbar ist.

7. Anordnung nach einem der Ansprüche 1 bis 6,
**dadurch gekennzeichnet, dass**
die Axialverbindungsvorrichtung (12) einen Bajonettring (20) umfasst, über den die Verbindungselemente (16) der Axialverbindungsvorrichtung (12) miteinander verbunden sind.

8. Anordnung nach einem der Ansprüche 1 bis 7,
**dadurch gekennzeichnet, dass**
die Formschlusselemente (11) des Prüflingsadapters (9) im Wesentlichen eine funktionale Negativform der Formschlusselemente (11) des Wellenadapters (10) aufweisen,
wobei die Formschlusselemente (11) des Prüflingsadapters (9) und die Formschlusselemente (11) des Wellenadapters (10) zusammen eine im Wesentlichen spielfreie, formschlüssige Drehverbindung bilden oder eine im Wesentlichen in beide Drehrichtungen spielfreie, formschlüssige Drehverbindung bilden.

9. Anordnung nach einem der Ansprüche 1 bis8,
**dadurch gekennzeichnet, dass**
die Prüflingskupplungsvorrichtung (8) zur Anbindung an die Welle (6) eine flexible Wellenverbindung, ein Kreuzgelenk oder ein Gleichlaufgelenk aufweist.

10. System umfassend eine Anordnung nach einem der Ansprüche 1 bis 9,
**dadurch gekennzeichnet, dass**
mehrere Wellen (6) mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung (7) mit der Prüflingskupplungsvorrichtung (8) einsetzbar sind.

11. System umfassend eine Anordnung nach einem der Ansprüche 1 bis 9,
**dadurch gekennzeichnet, dass**
mehrere Wellen (6) mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung (7) mit der Prüflingskupplungsvorrichtung (8) einsetzbar sind, und dass die Wellen (6) jeweils mit einem Wellenadapter (10) verbunden sind.

12. System umfassend eine Anordnung nach einem der Ansprüche 1 bis 9,
**dadurch gekennzeichnet, dass**
mehrere Prüflinge (4) vorgesehen sind, die jeweils mit einem Prüflingsadapter (9) verbunden sind, wobei die Prüflinge (4) und deren Prüflingsadapter (9) wahlweise durch Verbinden mit dem Wellenadapter (10) mit der Belastungsmaschine (2) verbindbar sind.

13. System umfassend eine Anordnung nach einem der Ansprüche 1 bis 9,
**dadurch gekennzeichnet, dass**
die Formschlusselemente (11) aller Wellenadapter (10) zur formschlüssigen Drehverbindung mit den Formschlusselementen (11) aller Prüflingsadapter (9) geeignet und eingerichtet sind.

14. System umfassend eine Anordnung nach einem der Ansprüche 1 bis 9,
**dadurch gekennzeichnet, dass**
das System eine Belastungsmaschine (2) eines Prüfstandes und insbesondere eines Motorenprüfstandes umfasst.

## Claims

1. Arrangement for the rotary connection of a dynamometer connection component (1) of a dynamometer (2) of a test stand with a test object connection component (3) of a test object (4), comprising:
- at least one shaft (6) extending along the axis of rotation (5) of the rotary connection,
- one dynamometer coupling device (7) for the rotary connection of the shaft (6) with the dynamometer connection component (1),
- a test object coupling device (8) for the rotary connection of the shaft (6) with the test object connection component (3),
**characterized in**
- **that** the test object coupling device (8) comprises at least one test object adapter (9) which is adapted to be connected with the test object connection component (3) of a test object (4) and a shaft adapter (10) which is adapted to be connected or is connected with the shaft (6),
- **that** the test object adapter (9) and the shaft adapter (10) comprise form-fit elements (11) for the detachable and form-fitting rotary connection of the test object adapter (9) with the shaft adapter (10),
- **that** an axial connection device (12) is provided for the axial connection of the test object adapter (9) to the shaft adapter (10),
- **that** the axial connection device (12) is designed similar to a bayonet lock,
- **that** a clamping web (13) is adapted to be arranged between the clamping bodies (14) of the axial connection device (12) by a movement sequence of an axial movement and a rotary movement of the axial connection device (12),
- and **that** the clamping bodies (14) act as an axial lock against an axial separation of the test object adapter (9) from the shaft adapter (10) and as an anti-twist device for the bayonet-lock-like axial connection device (12).

2. Arrangement according to claim 1, **characterized in that** the form-fit elements (11) protrude from the mutually facing sides of the shaft adapter (10) and the test object adapter (9) substantially along the direction of the axis of rotation (5), i.e. axially, and are adapted to be plugged into one another in the axial direction to produce the form-fit rotary connection and are adapted to be removed from one another in the axial direction in order to separate the form-fit rotary connection.

3. Arrangement according to claim 1 or 2, **characterized in that** when the positive rotary connection is established, the test object adapter (9) and the shaft adapter (10) together form the clamping web (13) which is clamped between clamping bodies (14) of the axial connection device (12) for the axial connection of the test object adapter (9) with the shaft adapter (10) .

4. Arrangement according to one of Claims 1 to 3, **characterized in**
- **that** the test object adapter (9) and the shaft adapter (10) have openings (15) extending in the axial direction,
- **that** the at least one opening (15) of the test object adapter (9) is arranged to be at least partially aligned with the at least one opening (15) of the shaft adapter (10) when the form-fit elements (11) of the test object adapter (9) is in engagement with the form-fit elements (11) of the shaft adapter (10) for the rotary connection,
- and **that** the axial connection device (12) has at least one connection element (16) which for the axial connection of the test object adapter (9) with the shaft adapter (10) protrudes through the openings (15).

5. Arrangement according to one of Claims 1 to 4, **characterized in**
- **that** the test object adapter (9) and the shaft adapter (10) have openings (15) extending in the axial direction,
- **that** the openings (15) of the test object adapter (9) are arranged to at least partially align with the openings (15) of the shaft adapter (10) when the form-fit elements (11) of the test object adapter (9) are in engagement with the form-fit elements (11) of the shaft adapter (10) for the rotary connection,
- **that** the axial connection device (12) includes connecting elements (16) protruding through the openings (15) for the axial connection of the test object adapter (9) with the shaft adapter (10),
- **that** the openings (15) each have an insertion clearance (19) for the axial introduction of the connecting element (16) of the axial connection device (12) and a clamping web clearance (17) for the axial connection of the test object adapter (9) with the shaft adapter (10) by actuating the connecting element (16), wherein the clamping web clearance (17) extends along a pitch circle around the axis of rotation (5) and is in particular curved in the shape of an elongated hole,
- **that** the connecting elements (16) each include a shaft (18) having a shaft thickness and two clamping bodies exceeding the shaft thickness (14),
- **that** the clamping web clearance (17) has a free width transverse to its extension and in particular in the radial direction, said width being greater than the shaft thickness of the shaft (18) of the respective connecting element (16) but is exceeded by the two clamping bodies (14) of the connecting element (16),
- **that** the insertion clearance (19) is larger than the relevant section of at least one of the two clamping bodies (14) or both clamping bodies (14) of the connecting element (16),
- so that the connecting elements (16) of the axial connecting device (12) are adapted to be inserted in the axial direction into the insertion clearances (19) of the openings (15) in a manner similar to a bayonet lock, are adapted to be rotated about the axis of rotation (5) along the extension of the clamping web clearances (17) of the openings (15), and are adapted to be fixed by clamping the clamping web (13) between the clamping bodies (14).

6. Arrangement according to one of claims 4 or 5, **characterized in that** the connecting elements (16) each comprise a screw connection, the shaft (18) of the connecting element (16) being a screw shaft which is screwed or is adapted to be screwed into at least one of the two clamping bodies (14), and that the distance and the clamping force between the two clamping bodies (14) is adapted to be changed by changing the screw-in depth.

7. Arrangement according to one of claims 1 to 6, **characterized in that** the axial connection device (12) comprises a bayonet ring (20) by means of which the connection elements (16) of the axial connection device (12) are connected to one another.

8. Arrangement according to one of claims 1 to 7, **characterized in that** the form-fit elements (11) of the test object adapter (9) substantially present a functional negative shape of the form-fit elements (11) of the shaft adapter (10),
wherein the form-fit elements (11) of the test object adapter (9) and the form-fit elements (11) of the shaft adapter (10) together form an essentially play-free, form-fitting rotary connection or form a form-fitting rotary connection which is substantially free of play in both directions of rotation.

9. Arrangement according to one of claims 1 to 8, **characterized in that** the test object coupling device (8) has a flexible shaft connection, a universal joint or a constant velocity joint for connection to the shaft (6).

10. System comprising an arrangement according to one of claims 1 to 9, **characterized in that** a plurality of shafts (6) with different stiffnesses is provided or available, which can be used to change the stiffness of the measuring string of the arrangement, optionally for connecting the dynamometer coupling device (7) to the test object coupling device (8).

11. System comprising an arrangement according to one of claims 1 to 9, **characterized in that** a plurality shafts (6) with different stiffnesses is provided or available, which can be used to change the stiffness of the measuring string of the arrangement optionally for connecting the dynamometer coupling device (7) to the test object coupling device (8), and that the shafts (6) are each connected with a shaft adapter (10).

12. System comprising an arrangement according to one of claims 1 to 9, **characterized in that** a plurality of test objects (4) is provided, each of which is connected to a test object adapter (9), the test objects (4) and their test object adapters (9) being optionally connectable to the dynamometer (2) by connection with the shaft adapter (10).

13. System comprising a system according to one of claims 1 to 9, **characterized in that** the form-fit elements (11) of all shaft adapters (10) are suitable and configured for the form-fit rotary connection with the form-fit elements (11) of all test object adapters (9).

14. System comprising an arrangement according to one of claims 1 to 9, **characterized in that** the system comprises a dynamometer (2) of a test stand and in particular of an engine test stand.

## Revendications

1. Agencement pour le raccordement rotatif d'un élément de connexion d'un dynamomètre (2) d'un banc d'essai avec l'élément connexion d'objet d'essai (3) d'un objet d'essai (4), comprenant:
- au moins un arbre (6) s'étendant le long de l'axe de rotation (5) du raccordement rotatif,
- un dispositif d'accouplement de dynamomètre (7) pour le raccordement rotatif de l'arbre (6) avec l'élément de connexion de dynamomètre (1),
- un dispositif d'accouplement de dynamomètre (7) pour le raccordement rotatif de l'arbre (6) avec l'élément de connexion de dynamomètre (1),
- un dispositif d'accouplement d'objet d'essai (8) pour le raccordement rotatif de l'arbre (6) avec l'élément de connexion d'objet d'essai (3),
**caractérisé en ce**
- **que** le dispositif d'accouplement d'objet d'essai (8) comprend au moins un adaptateur d'objet d'essai (9) qui peut être relié ou est relié à l'élément de connexion d'objet d'essai (3) d'une objet d'essai (4) et un adaptateur d'arbre (10) qui peut être relié ou est relié à l'arbre (6),
- **que** l'adaptateur d'objet d'essai (9) et l'adaptateur d'arbre (10) comprennent des éléments d'engagement positif (11) pour le raccordement rotatif amovible et positif de l'adaptateur d'objet d'essai (9) avec l'adaptateur d'arbre (10),
- **qu'**un dispositif de liaison axiale (12) est prévu pour la liaison axiale de l'adaptateur d'objet d'essai (9) à l'adaptateur d'arbre (10),
- **que** le dispositif de liaison axiale (12) est conçu comme une fermeture à baïonnette,
- **qu'**une barre de serrage (13) peut être disposée entre les corps de serrage (14) du dispositif de liaison axiale (12) par une séquence de mouvements d'un mouvement axial et d'un mouvement de rotation du dispositif de liaison axiale (12),
- et **que** les corps de serrage (14) agissent comme un moyen de blocage axiale contre une séparation axiale de l'adaptateur d'objet d'essai (9) de l'adaptateur d'arbre (10) et comme un dispositif anti-torsion pour le dispositif de liaison axiale (12) conçu comme une fermeture à baïonnette.

2. Agencement selon la revendication 1, **caractérisé en ce que** les éléments d'engagement positif (11) font saillie depuis les côtés se faisant face de l'adaptateur d'arbre (10) et de l'adaptateur d'objet d'essai (9) essentiellement le long de la direction de l'axe de rotation (5), c'est-à-dire axialement, et peuvent être emboîtés l'un dans l'autre dans le sens axial pour réaliser le raccordement rotatif positif et peuvent être séparés les uns des autres dans le sens axial afin de séparer le raccordement rotatif positif.

3. Agencement selon la revendication 1 ou 2, **caractérisé en ce que** lorsque la liaison rotative positive est établie, l'adaptateur d'objet d'essai (9) et l'adaptateur d'arbre (10) forment ensemble une barre de serrage (13) qui est serrée entre les corps de serrage (14) du dispositif de liaison axiale (12) pour le raccordement axial de l'adaptateur d'objet d'essai (9) à l'adaptateur d'arbre (10).

4. Agencement selon l'une des revendications 1 à 3, **caractérisé en ce**
- **que** l'adaptateur d'objet d'essai (9) et l'adaptateur d'arbre (10) présentent des ouvertures (15) s'étendant dans la direction axiale,
- **que** la au moins une ouverture (15) de l'adaptateur d'objet d'essai (9) est agencée de sorte qu'elle soit au moins partiellement alignée avec la au moins une ouverture (15) de l'adaptateur d'arbre (10) lorsque les éléments d'engagement positif (11) de l'adaptateur d'objet d'essai (9) avec les éléments d'engagement positif (11) de l'adaptateur d'arbre (10) sont en prise pour le raccordement rotatif,
- et en ce que le dispositif de liaison axiale (12) comprend au moins un élément de liaison (16) qui fait saillie à travers les ouvertures (15) pour la liaison axiale de l'adaptateur d'objet d'essai (9) à l'adaptateur d'arbre (10).

5. Agencement selon l'une des revendications 1 à 4, **caractérisé en ce**
- **que** l'adaptateur d'objet d'essai (9) et l'adaptateur d'arbre (10) présentent des ouvertures (15) s'étendant dans le sens axial,
- **que** les ouvertures (15) de l'adaptateur d'objet d'essai (9) sont disposées de sorte qu'elles soient au moins partiellement alignées avec les ouvertures (15) de l'adaptateur d'arbre (10) lorsque les éléments d'engagement positif (11) de l'adaptateur d'objet d'essai (9) avec les éléments d'engagement positif (11) de l'adaptateur d'arbre (10) sont en prise pour le raccordement rotatif,
- **que** le dispositif de liaison axiale (12) des éléments de liaison (16) qui font saillie à travers les ouvertures (15) pour la liaison axiale de l'adaptateur d'objet d'essai (9) avec l'adaptateur d'arbre (10),
- **que** les ouvertures (15) comportent chacune un jeu d'insertion (19) pour l'introduction axiale de l'élément de liaison (16) du dispositif de liaison axiale (12) et un jeu de barre de serrage (17) pour le raccordement axial de l'adaptateur d'objet d'essai (9) à l'adaptateur d'arbre (10) par actionnement de l'élément de liaison (16), dans lequel le jeu de la barre de serrage (17) s'étend le long d'un cercle primitif autour de l'axe de rotation (5) et est en particulier courbé en forme de trou allongé,
- **que** les éléments de liaison (16) comprennent chacun une tige (18) avec une épaisseur de tige et deux corps de serrage supérieures à l'épaisseur de la tige (14),
- **que** transversalement à sa course et en particulier dans le sens radial, le jeu de barre de serrage (17) présente une largeur libre qui est supérieure à l'épaisseur de la tige de ladite tige (18) de l'élément de liaison (16) respectif mais est dépassée par les deux corps de serrage (14) de l'élément de liaison (16),
- **que** le jeu d'insertion (19) est supérieur à la section relative d'au moins l'un des deux corps de serrage (14) ou des deux corps de serrage (14) de l'élément de liaison (16),
- de sorte que les éléments de liaison (16) du dispositif de liaison axiale (12) puissent être insérés dans la direction axiale dans les jeux d'insertion (19) des ouvertures (15) à la manière d'une fermeture à baïonnette, puissent être tournés le long de l'extension des jeux de barre de serrage (17) des ouvertures (15) autour de l'axe de rotation (5), et puissent être fixées par serrage de la barre de serrage (13) entre les corps de serrage (14).

6. Agencement selon l'une des revendications 4 ou 5, **caractérisé en ce que** les éléments de liaison (16) comprennent chacun une liaison vissée, la tige (18) de l'élément de liaison (16) étant une tige filetée qui est vissée ou peut être vissée dans au moins l'un des deux corps de serrage (14), et que la distance et la force de serrage entre les deux corps de serrage (14) peuvent être modifiés en modifiant la profondeur de vissage.

7. Agencement selon l'une des revendications 1 à 6, **caractérisé en ce que** le dispositif de liaison axiale (12) comprend un anneau à baïonnette (20), par l'intermédiaire duquel les éléments de liaison (16) du dispositif de liaison axiale (12) sont reliés les uns aux autres.

8. Agencement selon l'une des revendications 1 à 7, **caractérisé en ce que** les éléments d'engagement positif (11) de l'adaptateur d'objet d'essai (9) présentent essentiellement une forme négative fonctionnelle des éléments d'engagement positif (11) de l'adaptateur d'arbre (10),
les éléments d'engagement positif (11) de l'adaptateur d'objet d'essai (9) et les éléments d'engagement positif (11) de l'adaptateur d'arbre (10) formant ensemble un raccordement rotatif positif essentiellement sans jeu ou formant un raccordement rotatif positif qui est sensiblement sans jeu dans les deux sens de rotation.

9. Agencement selon l'une des revendications 1 à 8, **caractérisé en ce que** le dispositif d'accouplement d'objet d'essai (8) comprend une liaison d'arbre flexible, un joint universel ou un joint homocinétique pour le raccordement à l'arbre (6).

10. Système comprenant un agencement selon l'une des revendications 1 à 9, **caractérisé en ce que** plusieurs arbres (6) avec des raideurs différentes sont prévus ou disponibles, qui peuvent être utilisés pour modifier la rigidité de la colonne de mesure de l'agencement pour relier au choix le dispositif d'accouplement du dynamomètre (7) au dispositif d'accouplement d'objet d'essai (8).

11. Système comprenant un agencement selon l'une des revendications 1 à 9, **caractérisé en ce que** plusieurs arbres (6) avec des raideurs différentes sont prévus ou disponibles, qui peuvent être utilisés pour modifier la rigidité de la colonne de mesure de l'agencement pour relier au choix le dispositif d'accouplement du dynamomètre (7) au dispositif d'accouplement de l'objet d'essai (8), et que les arbres (6) sont reliés chacun à un adaptateur d'arbre (10).

12. Système comprenant un agencement selon l'une des revendications 1 à 9, **caractérisé en ce que** plusieurs objets d'essai (4) sont fournis, chacun d'eux étant connecté à un adaptateur d'objets d'essai (9), les objets d'essai (4) et leurs adaptateurs d'objet d'essai (9) pouvant être au choix connectés au dynamomètre (2) par connexion avec l'adaptateur d'arbre (10).

13. Système comprenant un agencement selon l'une des revendications 1 à 9, **caractérisé en ce que** les éléments d'engagement positif (11) de tous les adaptateurs d'arbre (10) sont adaptés et configurés pour le raccordement rotatif positif avec les éléments d'engagement positif (11) de tous les adaptateurs d'objet d'essai (9).

14. Système comprenant un agencement selon l'une des revendications 1 à 9, **caractérisé en ce que** le système comprend un dynamomètre d'un banc d'essai (2) et en particulier un banc d'essai de moteur.
